# FASCICULE DE BREVET EUROPEEN

(11) **EP 2 588 337 B1**
(45) Date de publication et mention de la délivrance du brevet: **01.04.2015**
(21) Numéro de dépôt: 11728298.8
(22) Date de dépôt: 30.06.2011
(51) Int. Cl.: B60K 7/00, B60K 17/04, B60T 13/74, F16D 55/227, H02K 21/22, H02K 7/102, H02K 7/116

(54) **MOYEU MOTORISE COMPRENANT UNE MACHINE ELECTRIQUE DE TRACTION**
MOTORISIERTE NABE MIT EINEM ELEKTROANTRIEB
MOTORISED HUB WITH AN ELECTRIC DRIVE

(30) Priorité: 01.07.2010 FR 1055271
(43) Date de publication de la demande: 08.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MARRO, Patrick, 63040 Clermont-Ferrand Cedex 9 (FR); WALSER, Daniel, 63040 Clermont-Ferrand Cedex 9 (FR)
(74) Mandataire: Lasson, Cédric Y. M.
(86) Numéro de dépôt international: PCT/EP2011/061062
(87) Numéro de publication internationale: WO 2012/001128

(56) Documents cités:
- WO-A1-2007/017221
- WO-A2-2009/124892
- FR-A1- 2 859 951
- JP-A- 2005 263 140
- JP-A- 2007 120 559

## Description

La présente invention concerne la liaison au sol des véhicules automobiles à traction électrique, en particulier leurs roues motorisées.

Dans ce domaine, on connaît un certain nombre de propositions comme celles des documents EP 0878332, EP 1630026, WO 2006/032669, US 2007/0257570, WO 2007/083209 ou WO 2009/124892.

Dans la présente demande, on utilise l'expression « moyeu motorisé » pour désigner l'ensemble mécanique comprenant le moyeu, le porte-moyeu, le guidage du moyeu par rapport au porte-moyeu, la motorisation électrique et les moyens de freinage du moyeu. Le moyeu motorisé est donc destiné d'une part à recevoir une roue équipée par exemple d'un pneumatique et à porter d'autre part un véhicule, généralement par l'intermédiaire de moyens de suspension. Dans la présente demande, on utilise également l'expression « roue motorisée » pour désigner l'ensemble mécanique comprenant le moyeu motorisé défini ci-dessus et la roue correspondante.

Le document JP 2005 26 3140 décrit un moyeu motorisé pour un véhicule automobile à traction électrique, ledit moyeu motorisé comprenant un moyeu destiné à recevoir une roue), le moyeu étant monté rotatif par rapport à un porte-moyeu selon un axe de moyeu , le moyeu motorisé comprenant une machine électrique de traction), la machine électrique comprenant un stator externe lié au porte-moyeu et un rotor interne dont l'axe de rotation est distant de l'axe de moyeu, le moyeu motorisé comprenant des moyens de réduction agissant entre l'arbre du rotor de la machine électrique et le moyeu, le moyeu motorisé comprenant des moyens de freinage par friction, un rotor de freinage étant solidaire du moyeu en rotation le rotor de frein étant disposé axialement du côté intérieur du véhicule par rapport audit moyeu, l'arbre du rotor de la machine électrique étant placé radialement à l'extérieur du rotor de freinage et s'étendant axialement depuis les moyens de réduction vers l'intérieur du véhicule, les moyens de réduction comprenant un pignon moteur lié au rotor de la machine électrique et une couronne dentée liée au moyeu, un arbre de frein traversant le porte-moyeu pour relier le rotor de freinage au moyeu, les moyens de réduction comprenant deux étages de réduction et le moyeu étant monté rotatif par l'intermédiaire de roulements de moyeu placés autour d'une fusée introduite par la division d'examen du porte-moyeu, l'arbre de frein traversant axialement un évidement de la fusée.

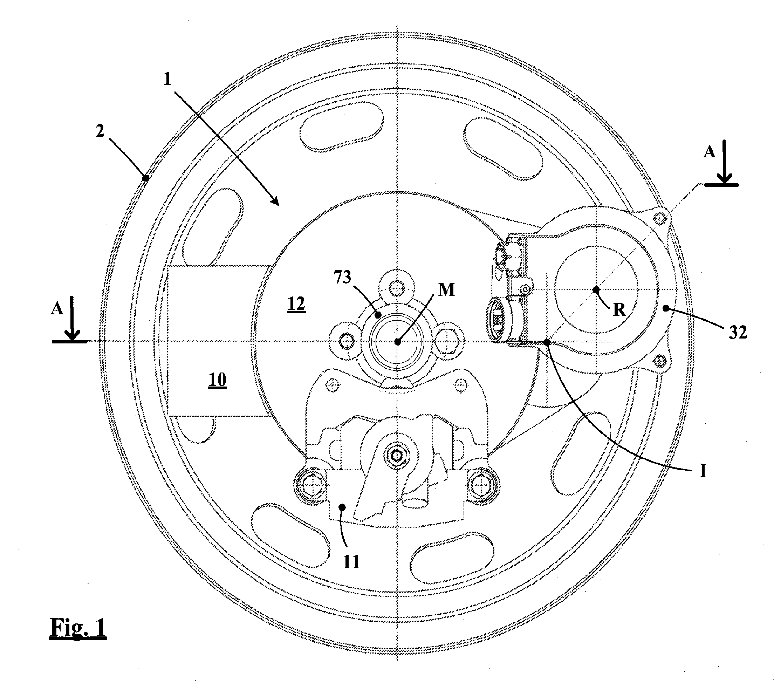

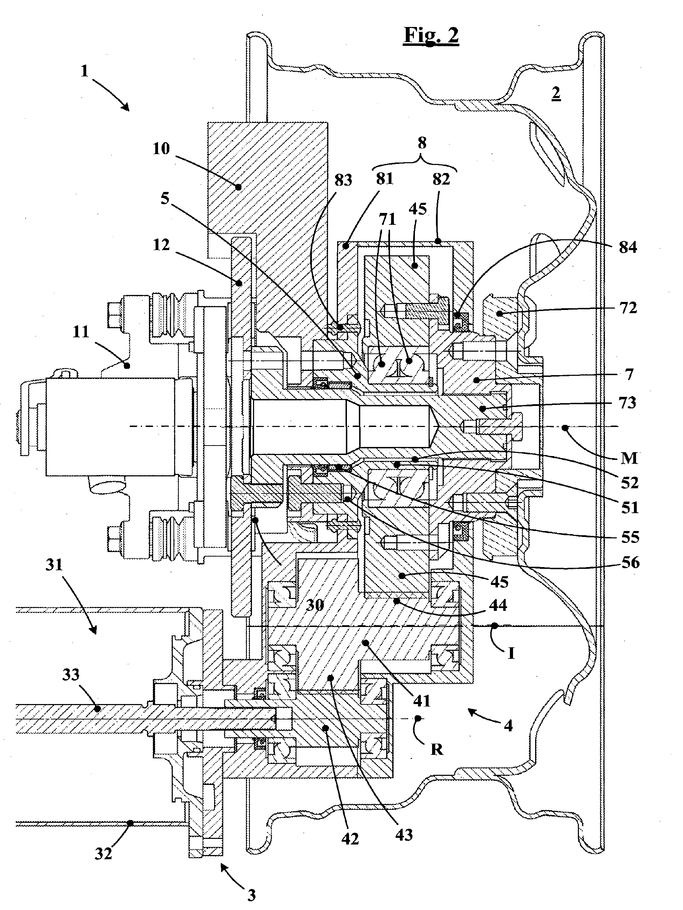

Le document WO2009/24892 décrit un moyeux motorisé selon le préambule de la revendication 1, dont la conception permet en particulier une bonne compatibilité avec les solutions déjà adoptées et validées par les constructeurs automobiles pour certains éléments comme les systèmes de suspension et les roues. Pour cela, il est proposé que l'arbre de la machine électrique soit placé radialement à l'extérieur du disque de frein, le disque de frein étant placé du côté intérieur du véhicule par rapport au porte-moyeu. Selon une première variante représentée aux figures 1 et 2 du document WO2009/24892, le moyeu est tournant dans un alésage du carter. Le carter fait donc office de porte-moyeu et supporte en outre la pince de frein. La rigidité de guidage d'une telle conception s'avère insuffisante. Selon une autre variante représentée à la figure 3 de ce même document WO2009/24892, le moyeu est tournant autour d'une fusée, ladite fusée traversant le plan du disque de frein. La rigidité de ce guidage s'avère également insuffisante du fait de la grande longueur de la fusée. Selon encore d'autres variantes représentées aux figures 4 à 8 de ce même document, le moyeu est tournant dans un alésage du carter mais la pince de frein est cette fois maintenue par le bras de suspension et non par le carter. Ces dernières variantes, bien que satisfaisantes sur le plan du guidage, sont d'un assemblage très complexe et sont donc très coûteuses tant du point de vue de leur fabrication que de leur entretien.

L'invention a donc pour objet de d'améliorer les moyeux motorisés de ce type afin de les rendre encore plus performants, par exemple en les rendant plus rigides et/ou plus compactes et/ou plus légers.

L'invention concerne donc un moyeu motorisé pour un véhicule automobile à traction électrique, ledit moyeu motorisé comprenant un moyeu destiné à recevoir une roue, le moyeu étant monté rotatif par rapport à un porte-moyeu selon un axe de moyeu, le moyeu motorisé comprenant une machine électrique de traction, la machine électrique comprenant un stator externe lié au porte-moyeu et un rotor interne dont l'axe de rotation est distant de l'axe de moyeu, le moyeu motorisé comprenant des moyens de réduction agissant entre l'arbre du rotor de la machine électrique et le moyeu, le moyeu motorisé comprenant des moyens de freinage par friction à sec, un rotor de freinage (12) refroidi par l'air ambiant étant solidaire du moyeu en rotation par l'intermédiaire d' un arbre de frein (73), le rotor de frein étant disposé axialement du côté intérieur du véhicule par rapport audit moyeu, l'arbre du rotor de la machine électrique étant placé radialement à l'extérieur du rotor de freinage et s'étendant axialement depuis les moyens de réduction vers l'intérieur du véhicule, les moyens de réduction comprenant un pignon moteur (42) lié au rotor de la machine électrique et une couronne dentée (45) liée au moyeu, un arbre de frein (73) traversant le porte-moyeu pour relier le rotor de freinage au moyeu, l'arbre de frein étant indépendant des moyens de réduction, le moyeu motorisé étant caractérisé en ce que les moyens de réduction comprennent deux étages de réduction et en ce que le moyeu est monté rotatif par l'intermédiaire de roulements de moyeu placés autour d'une fusée du porte-moyeu, l'arbre de frein traversant axialement un évidement de la fusée.

De préférence, un premier étage de réduction est constitué par l'engrenage du pignon moteur et d'une roue dentée solidaire d'un arbre intermédiaire, un deuxième étage de réduction étant constitué par l'engrenage d'un pignon de réducteur solidaire de l'arbre intermédiaire avec la couronne dentée liée au moyeu.

De préférence, l'axe de l'arbre intermédiaire et l'axe du rotor sont parallèles à l'axe du moyeu.

De préférence, le rotor de freinage est un disque, une pince de frein étant solidaire du porte-moyeu.

De préférence, l'arbre de frein traversant la fusée est en outre guidé par rapport au porte-moyeu par un palier.

De préférence, un carter contient les moyens de réduction et porte la machine électrique.

De préférence, le rotor de freinage s'étend radialement à l'extérieur de la partie du stator de la machine électrique radialement la plus à l'intérieur, le rotor de freinage étant placé axialement entre le stator de la machine électrique et les moyens de réduction.

L'invention concerne également une roue motorisée comprenant un tel moyeu motorisé.

De préférence, la roue motorisée comprend une roue conventionnelle monobloc, de préférence encore, en tôle d'acier.

L'invention concerne également un véhicule comprenant au moins deux telles roues motorisées.

De préférence, deux roues motorisées sont disposées sur l'essieu arrière dudit véhicule. De préférence encore, les porte-moyeux des deux roues motorisées sont solidaires chacun d'un bras d'un essieu arrière torsible ou à bras tirés de l'essieu arrière dudit véhicule.

D'autres caractéristiques et avantages de l'invention apparaîtront grâce à la description d'un mode préféré de réalisation. Les figures représentent respectivement:
- Figure 1 : vue plane selon l'axe de moyeu depuis l'intérieur du véhicule d'un mode de réalisation du moyeu motorisé selon l'invention.
- Figure 2 : vue en coupe de ce mode de réalisation selon la ligne brisée A-A visible à la figure 1.

Sur les différentes figures, les éléments identiques ou similaires portent la même référence. Leur description n'est donc pas systématiquement reprise.

Les figures représentent un mode préféré de réalisation d'une roue motorisé selon l'invention. Le moyeu motorisé 1 est destiné à guider et contrôler la rotation d'une roue 2. Le pneumatique a été omis sur les figures. Un moyeu 7, destiné à recevoir la roue 2, est monté tournant par rapport à un porte-moyeu 5 selon un axe de moyeu M.

L'axe de moyeu M est une référence constante dans la présente demande, c'est par rapport à cet axe que l'on se réfère pour qualifier une orientation de « radiale » ou d'« axiale ». Pour rappel et selon l'usage consacré dans le domaine du pneumatique ou de la roue, une orientation axiale est une orientation parallèle à l'axe du moyeu et une orientation radiale est une orientation perpendiculaire à l'axe du moyeu.

Une machine électrique 3 assure la motorisation et le cas échéant le freinage du moyeu. Pour alléger le dessin de la machine électrique, on a représenté uniquement l'arbre 33 du rotor interne 31 et le fourreau du stator externe 32. La rotation de la machine électrique est couplée à la rotation du moyeu par l'intermédiaire de moyens de réduction 4.

Une caractéristique essentielle du moyeu motorisé selon l'invention est que les moyens de réduction 4 comprennent au moins deux étages de réduction. De préférence, comme représenté ici les moyens de réduction consistent en deux étages de réduction. Le premier étage de réduction est constitué par l'engrenage du pignon moteur 42 et d'une roue dentée 43 liée à un arbre intermédiaire 41. Le pignon moteur 42 est entraîné par l'arbre 33 du rotor de la machine électrique 3. Le deuxième étage de réduction est constitué par l'engrenage d'un pignon de réducteur 44 lié à l'arbre intermédiaire 41 avec une couronne de moyeu 45 solidaire du moyeu 7.

L'axe du rotor R est distant de l'axe de moyeu M. L'axe I de l'arbre intermédiaire 41 est de préférence, comme représenté ici, parallèle à l'axe de moyeu M et à l'axe de rotation R du rotor. Le rapport de réduction global est de préférence supérieur à 15.

Une autre caractéristique essentielle du moyeu motorisé selon l'invention est que le porte-moyeu 5 comprend une fusée 51 autour de laquelle tourne le moyeu guidé par des roulements de moyeu 71. La partie intérieure des roulements de moyeu est donc fixe car solidaire de la fusée 51 alors que la partie extérieure des roulements tourne avec le moyeu 7. Dans ce mode de réalisation préféré, le guidage est assuré par un roulement à deux rangées de billes placé sensiblement en regard de la couronne dentée 45 solidaire du moyeu.

Une autre caractéristique essentielle du moyeu motorisé selon l'invention est que le rotor de freinage, c'est-à-dire ici le disque 12, est situé du côté intérieur du véhicule par rapport au porte-moyeu. Un arbre de frein 73 solidaire du moyeu 7 entraîne directement le disque en rotation. Le moyeu et le disque sont donc à tout moment entraînés à la même vitesse de rotation et ceci indépendamment de la transmission entre la machine électrique et le moyeu, c'est à dire indépendamment des moyens de réduction. L'arbre de frein travaille en parallèle des moyens de réduction et ne fait donc pas partie de la transmission. Pour ce faire, l'arbre de frein s'étend axialement à travers le porte-moyeu, c'est à dire qu'il tourne dans un évidement 52 de la fusée 51. La fusée est donc creuse.

L'indépendance entre la transmission et les moyens de freinage est importante du point de vue de la sécurité de fonctionnement.

De préférence, l'arbre de frein est en outre guidé par un palier 55 dans la fusée. De préférence ce palier est un roulement à aiguilles. L'arbre de frein est ici également évidé afin de limiter son poids.

L'ensemble des moyens de réduction et de guidage est logé dans un carter 8. Le carter peut en outre contenir une quantité adéquate d'un lubrifiant afin de lubrifier l'ensemble par barbotage. La partie intérieure 81 du carter n'est ici pas monobloc avec le porte-moyeu 5 mais ces deux pièces sont assemblées par des vis 83. Un avantage de cette séparation est que l'on peut alors choisir des matériaux différents pour le porte-moyeu et le carter, par exemple respectivement de l'acier et un alliage d'aluminium. La partie extérieure 82 du carter comporte une ouverture centrale pour le moyeu 7. Un joint à lèvre 84 assure l'étanchéité autour du moyeu. On comprend qu'un roulement étanche pourrait être monté en lieu et place du joint 84 afin de rigidifier encore les guidages de la roue et des moyens de réduction. Le carter est particulièrement compact et rigide du fait de la couronne de diamètre réduit.

Le stator 32 de la machine électrique est lié en rotation au porte-moyeu 5. Cette liaison, nécessaire à la transmission du couple, peut être rigide et directe comme représentée ici mais elle peut également être indirecte afin d'autoriser un mouvement relatif de rotation à l'occasion des débattements de suspension. Ce mouvement relatif doit bien sûr être limité et a pour but de permettre une certaine indépendance entre le couple transmis et les rigidités dynamiques (verticale et horizontale) du dispositif de suspension. Ici, le stator 32 est donc solidaire du carter 8 alors que le carter est lui-même solidaire du porte-moyeu 5. Dans l'hypothèse où une rotation du carter par rapport au porte-moyeu est permise, celle-ci peut-être contrôlée par exemple par une bielle agissant entre le carter et la caisse du véhicule (non représenté).

Le moyeu motorisé selon l'invention peut être fixé au véhicule, plus précisément à son système de suspension, par l'intermédiaire de vis engagées dans des filetages 56 du porte-moyeu 5. Le carter 8 est alors fixé à la base de la fusée et n'est plus porteur que de la machine électrique et des moyens de réduction.

Comme schématisé sur les figures, le moyeu motorisé selon l'invention peut être fixé sur un bras tiré 10 d'un essieu d'un véhicule, par exemple un essieu arrière torsible ou à bras tirés. L'avant du véhicule se trouve alors à gauche de la figure 1. On comprend bien que le moyeu motorisé selon l'invention peut également être combiné avec d'autres types de système de suspension avant ou arrière comme par exemple des systèmes à bras semi-tirés, des systèmes multi-bras ou des systèmes MacPherson ou pseudo-MacPherson.

La pince de frein 11 est bien sûr solidaire du porte-moyeu 5, par exemple par l'intermédiaire du bras de suspension 10.

Le véhicule selon l'invention peut être un véhicule à traction purement électrique ou un véhicule hybride. Une manière avantageuse de construire un véhicule hybride est de combiner une motorisation thermique conventionnelle de l'essieu avant et une motorisation électrique des roues de l'essieu arrière par l'intermédiaire de moyeux motorisés selon l'invention. La source d'énergie électrique peut être un ensemble de batteries ou de super-condensateurs, une pile à combustibles, un réseau urbain à la manière des trolley-bus ou toute autre source électrique disponible.

Sur les figures, on a représenté une seule machine électrique. Naturellement, on peut selon l'invention mettre en oeuvre deux ou plusieurs machines pour chaque moyeu, les machines engrenant chacune par l'intermédiaire d'un pignon moteur propre sur des moyens de réduction propres ou partagés. Grâce à une motorisation multiple, on peut augmenter le couple disponible et/ou réduire les dimensions axiale et radiale des machines électriques.

De même, on a systématiquement représenté un frein à disque. Il s'agit en effet du mode de réalisation préféré mais l'homme du métier sait que dans certaines situations, il peut être préférable d'utiliser un frein à tambour en lieu et place du frein à disque.

Quel que soit le mode de réalisation de l'invention, les moyens de réduction sont de préférence réversibles afin de permettre l'utilisation de la machine électrique en mode freinage. L'énergie électrique récupérée par la machine électrique en mode freinage peut être stockée ou dissipée de manière connue en soi.

Un avantage de la présente invention est que l'on peut utiliser des roues et des freins (mono-disques à sec refroidis par air, ventilés ou non, pinces) tout à fait conventionnels et donc relativement bon marché à l'achat comme à l'entretien.

Un flasque 72 est fixé à l'extrémité extérieure du moyeu 7 et reçoit la roue 2 fixée par des vis non représentées. Naturellement, une roue différente pourrait être fixée directement au moyeu 7 sans recours au flasque mais le système représenté ici a l'avantage de s'accommoder de roues et de vis de roue tout à fait conventionnelles. La roue représentée ici est une roue monobloc standard en tôle d'acier.

De préférence, comme représenté sur les figures, l'ensemble des moyens de réduction est contenu dans la roue. Ici, l'intégralité du stator de la machine électrique est placée axialement à l'extérieur de la roue vers l'intérieur du véhicule. En fonction des dimensions de la roue en particulier, une part plus ou moins importante de la machine électrique peut être incluse dans la roue.

De préférence, la rotation de la machine électrique est en permanence couplée à la rotation du moyeu comme représenté ici.

Bien que la présente description se concentre sur un mode de réalisation spécifique, l'homme du métier sait envisager d'autres combinaisons de différents moyens décrits ici avec d'autres moyens non décrits ici mais connus de l'état de la technique.

## Revendications

1. Moyeu motorisé (1) pour un véhicule automobile à traction électrique, ledit moyeu motorisé comprenant un moyeu (7) destiné à recevoir une roue (2), le moyeu étant monté rotatif par rapport à un porte-moyeu (5) selon un axe de moyeu (M), le moyeu motorisé comprenant une machine électrique de traction (3), la machine électrique comprenant un stator externe (32) lié au porte-moyeu et un rotor interne (31) dont l'axe de rotation (R) est distant de l'axe de moyeu, le moyeu motorisé comprenant des moyens de réduction (4) agissant entre l'arbre (33) du rotor de la machine électrique et le moyeu, le moyeu motorisé (1) comprenant des moyens de freinage par friction à sec, un rotor de freinage (12) refroidi par l'air ambiant étant solidaire du moyeu en rotation par l'intermédiaire d'un arbre de frein (73), le rotor de frein étant disposé axialement du côté intérieur du véhicule par rapport audit moyeu, l'arbre du rotor de la machine électrique étant placé radialement à l'extérieur du rotor de freinage et s'étendant axialement depuis les moyens de réduction vers l'intérieur du véhicule, les moyens de réduction comprenant un pignon moteur (42) lié au rotor de la machine électrique et une couronne dentée (45) liée au moyeu, un arbre de frein (73) traversant le porte-moyeu pour relier le rotor de freinage au moyeu, l'arbre de frein étant indépendant des moyens de réduction, le moyeu motorisé étant **caractérisé en ce que** les moyens de réduction comprennent deux étages de réduction et **en ce que** le moyeu est monté rotatif par l'intermédiaire de roulements de moyeu (71) placés autour d'une fusée (51) du porte-moyeu, l'arbre de frein traversant axialement un évidement (52) de la fusée.

2. Moyeu motorisé (1) selon la revendication 1 dans lequel un premier étage de réduction est constitué par l'engrenage du pignon moteur (42) et d'une roue dentée (43) solidaire d'un arbre intermédiaire (41), un deuxième étage de réduction étant constitué par l'engrenage d'un pignon de réducteur (44) solidaire de l'arbre intermédiaire (41) avec la couronne dentée (45) liée au moyeu (7).

3. Moyeu motorisé (1) selon la revendication 2 dans lequel l'axe (I) de l'arbre intermédiaire et l'axe (R) du rotor sont parallèles à l'axe (M) du moyeu.

4. Moyeu motorisé selon l'une des revendications précédentes dans lequel le rotor de freinage est un disque (12), une pince de frein (11) étant solidaire du porte-moyeu (7).

5. Moyeu motorisé selon l'une des revendications précédentes dans lequel l'arbre de frein traversant la fusée est en outre guidé par rapport au porte-moyeu par un palier (55).

6. Moyeu motorisé (1) selon l'une des revendications précédentes dans lequel un carter (8) contient les moyens de réduction (4) et porte la machine électrique (3).

7. Moyeu motorisé selon l'une des revendications précédentes dans lequel le rotor de freinage (12) s'étend radialement à l'extérieur de la partie du stator de la machine électrique radialement la plus à l'intérieur, le rotor de freinage étant placé axialement entre le stator de la machine électrique et les moyens de réduction.

8. Roue motorisée (1, 2) comprenant un moyeu motorisé (1) selon l'une des revendications précédentes.

9. Roue motorisée selon la revendication précédente, comprenant une roue (2) conventionnelle monobloc, de préférence en tôle d'acier.

10. Véhicule comprenant au moins deux roues motorisées selon l'une des revendications 8 ou 9.

11. Véhicule selon la revendication 10 dans lequel deux roues motorisées sont disposées sur l'essieu arrière dudit véhicule.

12. Véhicule selon la revendication 11 dans lequel les porte-moyeux (7) des deux roues motorisées sont solidaires chacun d'un bras (10) d'un essieu arrière torsible ou à bras tirés dudit véhicule.

## Patentansprüche

1. Motorgetriebene Nabe (1) für ein Kraftfahrzeug mit Elektroantrieb, wobei die motorgetriebene Nabe eine Nabe (7) aufweist, die dazu bestimmt ist, ein Rad (2) aufzunehmen, wobei die Nabe bezüglich eines Nabenträgers (5) um eine Nabenachse (M) drehbar gelagert ist, wobei die motorgetriebene Nabe eine elektrische Traktionsmaschine (3) aufweist, wobei die elektrische Maschine einen äußeren Stator (32), der mit dem Nabenträger verbunden ist, und einen inneren Rotor (31), dessen Drehachse (R) von der Nabenachse entfernt ist, aufweist, wobei die motorgetriebene Nabe Untersetzungsmittel (4) aufweist, die zwischen der Welle (33) des Rotors der elektrischen Maschine und der Nabe wirken, wobei die motorgetriebene Nabe (1) Mittel zum Bremsen durch Trockenreibung aufweist, wobei ein durch die Umgebungsluft gekühlter Bremsrotor (12) über eine Bremswelle (73) drehfest mit der Nabe verbunden ist, wobei der Bremsrotor in Bezug auf die Nabe axial auf der Innenseite des Fahrzeugs angeordnet ist, wobei die Welle des Rotors der elektrischen Maschine radial außerhalb des Bremsrotors angeordnet ist und sich axial von den Untersetzungsmitteln aus in Richtung des Inneren des Fahrzeugs erstreckt, wobei die Untersetzungsmittel ein mit dem Rotor der elektrischen Maschine verbundenes Motorritzel (42) und einen mit der Nabe verbundenen Zahnkranz (45) aufweisen, wobei eine Bremswelle (73) den Nabenträger durchquert, um den Bremsrotor mit der Nabe zu verbinden, wobei die Bremswelle von den Untersetzungsmitteln unabhängig ist, wobei die motorgetriebene Nabe **dadurch gekennzeichnet** ist, dass die Untersetzungsmittel zwei Untersetzungsstufen aufweisen, und dadurch, dass die Nabe über Nabenlager (71), die um einen Stummel (51) des Nabenträgers herum angeordnet sind, drehbar gelagert ist, wobei die Bremswelle eine Aussparung (52) des Stummels axial durchquert.

2. Motorgetriebene Nabe (1) nach Anspruch 1, wobei eine erste Untersetzungsstufe durch den Eingriff des Motorritzels (42) und eines mit einer Zwischenwelle (41) fest verbundenen Zahnrads (43) gebildet wird, wobei eine zweite Untersetzungsstufe durch den Eingriff eines mit der Zwischenwelle (41) fest verbundenen Untersetzungsritzels (44) mit dem mit der Nabe (7) verbundenen Zahnkranz (45) gebildet wird.

3. Motorgetriebene Nabe (1) nach Anspruch 2, wobei die Achse (I) der Zwischenwelle und die Achse (R) des Rotors parallel zur Achse (M) der Nabe sind.

4. Motorgetriebene Nabe nach einem der vorhergehenden Ansprüche, wobei der Bremsrotor eine Scheibe (12) ist, wobei eine Bremszange (11) mit dem Nabenträger (7) fest verbunden ist.

5. Motorgetriebene Nabe nach einem der vorhergehenden Ansprüche, wobei die Bremswelle, die den Stummel durchquert, außerdem durch ein Lager (55) bezüglich des Nabenträgers geführt wird.

6. Motorgetriebene Nabe (1) nach einem der vorhergehenden Ansprüche, wobei ein Gehäuse (8) die Untersetzungsmittel (4) enthält und die elektrische Maschine (3) trägt.

7. Motorgetriebene Nabe nach einem der vorhergehenden Ansprüche, wobei sich der Bremsrotor (12) radial außerhalb des radial am weitesten innen befindlichen Teils des Stators der elektrischen Maschine erstreckt, wobei der Bremsrotor axial zwischen dem Stator der elektrischen Maschine und den Untersetzungsmitteln angeordnet ist.

8. Motorgetriebenes Rad (1, 2), welches eine motorgetriebene Nabe (1) nach einem der vorhergehenden Ansprüche aufweist.

9. Motorgetriebenes Rad nach dem vorhergehenden Anspruch, welches ein herkömmliches einstückiges Rad (2) aufweist, vorzugsweise aus Stahlblech.

10. Fahrzeug, welches mindestens zwei motorgetriebene Räder nach einem der Ansprüche 8 oder 9 aufweist.

11. Fahrzeug nach Anspruch 10, wobei zwei motorgetriebene Räder auf der Hinterachse des Fahrzeugs angeordnet sind.

12. Fahrzeug nach Anspruch 11, wobei die Nabenträger (7) der zwei motorgetriebenen Räder jeweils mit einem Lenker (10) einer torsionselastischen Hinterachse oder Hinterachse mit gezogenen Lenkern des Fahrzeugs fest verbunden sind.

## Claims

1. Motorized hub (1) for an electrically powered motor vehicle, the said motorized hub comprising a hub (7) intended to accept a wheel (2), the hub being mounted so that it can rotate with respect to a hub carrier (5) about a hub axis (M), the motorized hub comprising an electric traction unit (3), the electric unit comprising an external stator (32) connected to the hub carrier, and an internal rotor (31) the axis of rotation (R) of which is distant from the hub axis, the motorized hub comprising reduction means (4) acting between the shaft (33) of the rotor of the electric unit and the hub, the motorized hub (1) comprising dry-friction braking means, a braking rotor (12) cooled by the ambient air being secured to the hub in terms of rotation via a brake shaft (73), the brake rotor being positioned axially on the inboard side of the vehicle with respect to the said hub, the shaft of the rotor of the electric unit being positioned radially on the outside of the braking rotor and extending axially from the reduction means towards the inside of the vehicle, the reduction means comprising a drive pinion (42) connected to the rotor of the electric unit and a ring gear (45) connected to the hub, a brake shaft (73) passing through the hub carrier to connect the braking rotor to the hub, the brake shaft being independent of the reduction means, the motorized hub being **characterized in that** the reduction means comprise two reduction stages and **in that** the hub is mounted so that it can rotate via rolling-contact hub bearings (71) positioned around a stub axle (51) of the hub carrier, the brake shaft passing axially through a cavity (52) of the stub axle.

2. Motorized hub (1) according to Claim 1, in which a first reduction stage consists of the meshing of the drive pinion (42) with a gear wheel (43) secured to an intermediate shaft (41), a second reduction stage consisting of the meshing of a reduction pinion (44) secured to the intermediate shaft (41) with the ring gear (45) connected to the hub (7).

3. Motorized hub (1) according to Claim 2, in which the axis (I) of the intermediate shaft and the axis (R) of the rotor are parallel to the axis (M) of the hub.

4. Motorized hub according to one of the preceding claims, in which the braking rotor is a disc (12), a brake caliper (11) being secured to the hub carrier (7).

5. Motorized hub according to one of the preceding claims, in which the brake shaft passing through the stub axle is also guided with respect to the hub carrier by a bearing (55).

6. Motorized hub (1) according to one of the preceding claims, in which a casing (8) contains the reduction means (4) and supports the electric unit (3).

7. Motorized hub according to one of the preceding claims, in which the braking rotor (12) extends radially out of the radially innermost part of the stator of the electric unit, the braking rotor being positioned axially between the stator of the electric unit and the reduction means.

8. Motorized wheel (1, 2) comprising a motorized hub (1) according to one of the preceding claims.

9. Motorized wheel according to the preceding claim, comprising a one-piece conventional wheel (2), preferably made of steel sheet.

10. Vehicle comprising at least two motorized wheels according to one of Claims 8 and 9.

11. Vehicle according to Claim 10, in which two motorized wheels are arranged on the rear axle of the said vehicle.

12. Vehicle according to Claim 11 in which the hub carriers (7) of the two motorized wheels are each secured to an arm (10) of a rear torsion axle or trailing arm axle of the said vehicle.
